# EUROPÄISCHE PATENTANMELDUNG

(11) **EP 2 413 004 A1**
(43) Veröffentlichungstag der Anmeldung: **01.02.2012**
(21) Anmeldenummer: 10007755.1
(22) Anmeldetag: 26.07.2010
(51) Int. Cl.: F16F 15/14

(54) **Dämpfungssystem für eine drehbare Welle**

(71) Anmelder: SIEMENS AKTIENGESELLSCHAFT, 80333 München (DE)
(72) Erfinder: Bison, Patrick, 45470 Mülheim an der Ruhr (DE); Deister, Frank, Dr., 47877 Willich (DE); Dettmar, Diethelm, 46485 Wesel (DE); Heinrichs, Elmar, 41844 Wegberg (DE); Paul, Traugott, 46282 Dorsten (DE); Strobach, Daniel, Dr., 47608 Geldern (DE); Thamm, Nobert, 45133 Essen (DE)

(57) **Zusammenfassung**

Die Erfindung betrifft ein Dämpfungssystem (1) für eine Welle einer Strömungsmaschine, die eine bewegbare Masse (4) sowie Rückhaltelemente (5) wie z. B. Federn aufweist, die einer Auslenkung der bewegbaren Masse (4) entgegenwirken und somit eine Schwingung der drehbaren Komponente (2) verhindern.

## Beschreibung

Die Erfindung betrifft ein Dämpfungssystem umfassend eine drehbare Komponente und eine an diese angeordnete Dämpfungsvorrichtung.

In Strömungsmaschinen wie beispielsweise Dampfturbinen werden Wellen entlang einer Rotationsachse drehbar gelagert und mit sogenannten Laufschaufeln ausgebildet. Um diese Wellen ist ein Gehäuse mit sogenannten Leitschaufeln angeordnet. Im Betrieb strömt Dampf mit bestimmten Dampfparametern wie Druck und Temperatur entlang eines Strömungskanals zwischen den Leit- und Laufschaufeln und versetzt die Welle in Rotation. Die Rotation kann bei einem Einsatz der Dampfturbine im kommunalen Energieversorgungsbereich eine Frequenz von 50Hz bzw. 60Hz oder 25Hz bzw. 30Hz aufweisen. Die Dampfturbinen werden in sogenannte Teilturbinen eingeteilt wie z. B. Hochdruck-, Mitteldruck- und Niederdruck-Teilturbinen. Die Einteilung in die vorgenannten Teilturbinen erfolgt nach den Dampfparametern, wobei die Einteilung in der Fachwelt nicht einheitlich verwendet wird. Durch die einzelnen Teilturbinen, die in der Regel hintereinander angeordnet sind, entsteht eine vergleichsweise lange Welle. Bei solchen Turbinensträngen treten häufig Torsionsschwingungen auf, die sich auf die Laufeigenschaften negativ auswirken und ggf. zu einer Beschädigung der Laufschaufeln oder auch Leitschaufeln führen können.

Diese negativen Auswirkungen versucht man durch eine Überdimensionierung der Bauteile bzw. einer Berechnung der Bauteilschwingungen und durch messtechnische Methoden zu vermeiden. Es ist beispielsweise bekannt, die Dampfturbine herunterzufahren, um größere Schäden abzuwenden, wenn durch eine messtechnische Methode erkannt wird, dass eine kritische Frequenz erreicht ist. Allerdings wäre es wünschenswert, bereits im Vorfeld ein Dämpfungssystem zu haben, bei dem störende Frequenzen unter ein kritisches Maß gedämpft werden.

Somit ist die Aufgabe der Erfindung, ein Dämpfungssystem anzugeben, bei dem schädliche Frequenzen einer Komponente vermieden werden.

Gelöst wird dieses Problem durch ein Dämpfungssystem umfassend eine drehbare Komponente und eine an diese angeordnete Dämpfungsvorrichtung, wobei die Dämpfungsvorrichtung eine bewegbare Masse aufweist und über Rückhalteelemente an die drehbare Komponente angeordnet ist, wobei die Rückhalteelemente eine Rückstellkraft auf die bewegbare Masse ausüben.

Eine Welle für eine Dampfturbine als Ausführungsform einer drehbaren Komponente wird somit mit einer Dämpfungsvorrichtung ausgebildet, die eine bewegbare Masse aufweist. Diese bewegbare Masse, die um die Rotationsachse bewegbar ausgebildet ist, wird über Rückhalteelemente an die drehbare Komponente angeordnet. Das bedeutet, dass eine Auslenkung der drehbaren Masse in Umfangsrichtung zu einer Rückstellkraft führt. Diese Rückstellkraft führt dazu, dass dem Ausschwenken der bewegbaren Masse eine Rückstellkraft entgegenwirkt und somit eine Schwingung wirksam vermieden werden kann.

Schwingungen sind im Grunde genommen zyklisch wiederholende Beschleunigungen und Verzögerungen. In den Beschleunigungsphasen wird die drehbare Masse gegenüber der drehbaren Komponente ausgelenkt, wobei die Rückhaltelemente dieser Auslenkung und somit der Beschleunigung entgegenwirken. Dies führt schließlich dazu, dass eine Schwingung gedämpft oder gar vermieden wird. Im Falle der Verzögerung wird ebenfalls die bewegbare Komponente gegenüber der drehbaren Komponente ausgelenkt und wiederum führt eine Rückstellkraft, hervorgerufen durch das Rückhalteelement, dazu, dass die Verzögerung verhindert wird.

In den Unteransprüchen sind vorteilhafte Weiterbildungen aufgeführt. So ist es vorteilhaft, die bewegbare Masse in Umfangsrichtung anzuordnen. Günstig im Sinne der Erfindung ist es hierbei, wenn die bewegbare Masse einen entsprechenden Abstand zur Rotationsachse aufweist. Die dadurch auftretenden Drehmomente, hervorgerufen durch die bewegbare Masse, sind umso größer, je weiter diese bewegbare Masse vom Rotationsmittelpunkt entfernt ist. Das bedeutet, dass je größer der Radius der bewegbaren Masse zur Rotationsachse ist, umso besser die Dämpfungswirkung.

Des Weiteren ist günstig im Sinne der Erfindung, wenn die bewegbare Masse in Umfangsrichtung angeordnet ist, d. h., dass entlang einer gedachten Linie in Umfangsrichtung die bewegbare Masse angeordnet ist. Somit kann die Dämpfungswirkung optimal ausgeführt werden.

In einer vorteilhaften Weiterbildung ist die bewegbare Masse in einer stirnseitigen Nut angeordnet. Die stirnseitige Nut könnte hierbei durch eine Drehmaschine eingearbeitet werden. Die stirnseitige Nut führt dazu, dass die bewegbare Masse aus einer axialen Richtung in die Nut geführt werden muss. Im Falle der hohen im Betrieb auftretenden Frequenzen würde eine Fliehkraft die bewegbare Masse lediglich gegen die Stirnwand drücken. Ein ungewolltes Auswerfen der bewegbaren Masse aufgrund der Fliehkräfte ist somit wirksam verhindert.

In einer vorteilhaften Weiterbildung wird eine Gleitschiene zwischen der Stirnwand und der bewegbaren Masse angeordnet. Dadurch kann die bewegbare Masse den Schwingungen besser entgegenwirken. Ein niedriger Reibungskoeffizient zwischen der Gleitschiene und der bewegbaren Masse ist ebenso vorteilhaft, denn dadurch kann die bewegbare Masse einer Schwingung, d. h. einer Beschleunigung oder einer Verzögerung wirksam entgegenwirken. Die Gleitschiene kann hierbei nach gängigen Fertigungsmethoden an einer Stirnwand angeordnet werden. Günstigerweise wird die Gleitschiene an die äußere Nutwand angeordnet. In einer vorteilhaften Weiterbildung sind die Rückhalteelemente als Federn ausgebildet. Im Sinne der Erfindung ist es wichtig, dass die Feder eine Kopplung zwischen der bewegbaren Masse und der drehbaren Komponente darstellt. Das bedeutet, dass die Feder zum einen fest mit der drehbaren Komponente als auch mit der bewegbaren Masse gekoppelt ist. Eine Auslenkung der bewegbaren Masse führt dann dazu, dass die Feder eine Rückstellkraft auf die bewegbare Masse ausübt und versucht, die bewegbare Masse wieder in die Normallage zu bringen. Eine Beschleunigung der drehbaren Komponente würde wiederum zu einem Ziehen der drehbaren Komponente an der Feder und die wiederum an der bewegbaren Masse führen, so dass eine Beschleunigung der drehbaren Komponente einer Rückstellkraft entgegenwirkt und dadurch die Schwingung vermindert.

In einer vorteilhaften Weiterbildung wird die bewegbare Masse in mehrere Segmente in Umfangsrichtung ausgebildet. Der einfachste Fall einer bewegbaren Masse wäre ein Ring, der in die stirnseitige Nut eingebracht wird und über zumindest zwei Federn mit der drehbaren Komponente gekoppelt wird. In weiteren Ausführungsformen wird die bewegbare Masse in mehrere Segmente ausgebildet. Dies führt zu einer mechanischen Entkopplung der einzelnen bewegbaren Massen und zu individuellen Rückstellkräften auf die jeweiligen Segmente, was ebenso zu einer Reduzierung der Schwingungsanfälligkeit führt. Die Segmente werden in einer vorteilhaften Weiterbildung mittels mehrerer Rückhalteelemente an die Dämpfungsvorrichtung angekoppelt.

In einer vorteilhaften Weiterbildung ist die Gleitschiene im Querschnitt gesehen, d. h. in Richtung der Rotationsachse im Wesentlichen parallel zur Rotationsachse ausgebildet. Das bedeutet, dass infolge der Fliehkraft keine Kraftkomponente in einer axialen Richtung entsteht und somit die bewegbare Masse an einem axialen Ort fixiert ist.

Die Erfindung wird anhand eines Ausführungsbeispiels näher erläutert.

Es zeigen:
- Figur 1: eine Draufsicht in axialer Richtung eines Dämpfungssystems;
- Figur 2: eine Querschnittsansicht des Dämpfungssystems;
- Figur 3: eine Prinzipskizze des Dämpfungssystems.

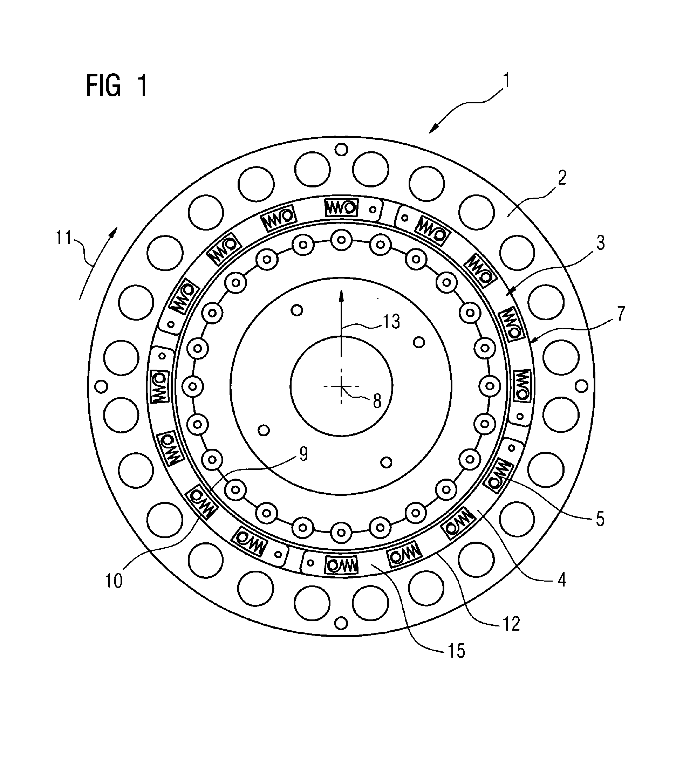

Die Figur 1 beschreibt ein Dämpfungssystem 1 umfassend eine drehbare Komponente 2 und eine an diese angeordnete Dämpfungsvorrichtung 3. Die Dämpfungsvorrichtung 3 umfasst wiederum eine bewegbare Masse 4 und Rückhalteelemente 5. Die drehbare Komponente 2 kann beispielsweise eine Welle für eine Strömungsmaschine wie z. B. einer Dampfturbine oder einer Gasturbine sein. Die Rückhalteelemente 5 können beispielsweise eine Feder sein. Die Dämpfungsvorrichtung 3 wird an einem stirnseitigen Ende 6 der drehbaren Komponente 2 angeordnet. Die bewegbare Masse 4 wird hierbei in eine stirnseitige Nut 7 in der drehbaren Komponente 2 eingearbeitet. Die stirnseitige Nut 7 kann hierbei über eine Drehmaschine eingearbeitet werden oder über eine Fräsmaschine ausgebildet sein. Die stirnseitige Nut 7 weist gegenüber einer Rotationsachse 8 eine innenseitige Stirnwand 9 und eine außenseitige Stirnwand 10 auf. Die drehbare Komponente 2 kann beispielsweise eine Kupplung sein, die mit einer Kupplung einer weiteren Welle drehmomentübertragend gekoppelt ist. In die stirnseitige Nut 7 wird die bewegbare Masse 4 bewegbar angeordnet. Die Bewegung der bewegbaren Masse 4 wird allerdings durch die Rückhalteelemente 5 begrenzt, die einer Auslenkung der bewegbaren Masse 4 entgegenwirken. Das Rückhalteelement 5 wird hierbei an einem Ende mit der bewegbaren Masse 4 und an dem anderen Ende mit der drehbaren Komponente 2 mechanisch gekoppelt. Das bedeutet, ein Ziehen der bewegbaren Masse 4 führt zu einer Dehnung der Rückhalteelemente 5 und das wiederum zu einer Rückstellkraft auf die bewegbare Masse 4, um somit zu einer entgegengesetzten Bewegung.

Die bewegbare Masse 4 wird hierbei in einer Umfangsrichtung 11 angeordnet. Durch diese Anordnung werden Tangentialkräfte in der bewegbaren Masse 4 berücksichtigt. In der stirnseitigen Nut 7 wird an der außenseitigen Nutwand 10 eine Gleitschiene 12 angeordnet. Im Betrieb wirkt eine Fliehkraft 13 in radialer Richtung 14. Das bedeutet, dass sowohl die Rückhalteelemente 5 und die bewegbare Masse 4 in dieser radialen Richtung 14 bewegt werden. Somit entsteht ein Kontakt zwischen der bewegbaren Masse 4 und der Gleitschiene 12. Zwischen der Gleitschiene 12 und der bewegbaren Masse 4 sollte demnach ein geringer Reibungskoeffizient herrschen. Jedenfalls sollte zwischen der bewegbaren Masse 4 und der Gleitschiene 12, die in einem Kontakt herrschen, eine Energie dissipiert werden. Die bewegbare Masse 4 ist in Umfangsrichtung 11 angeordnet und weist vier Segmente 15 auf. Insgesamt bildet die bewegbare Masse 4 einen Kreis. Das bedeutet, dass ein Segment 15 einen Vierteilkreis darstellt. Das einzelne Segment 15 kann für sich bewegt werden und wird über vier Rückhalteelemente 5 mit der drehbaren Komponente 2 gekoppelt. Somit werden in dieser Ausführungsform für das Dämpfungssystem 1 vier Segmente 15 sowie sechzehn Rückhalteelemente 5 benötigt. Die Federkonstante der Rückhalteelemente 5 und die Masse der bewegbaren Masse 4 müssen an die gegebenen Umstände angepasst werden. Diese gegebenen Umstände, die eine Zusammenschau der Frequenz der möglicherweise auftretenden Frequenzen sowie der Masse der drehbaren Komponente 2 berücksichtigt, müssen im Vorfeld derart bestimmt werden, dass die Federkonstante der Rückhalteelemente 5 sowie die Masse der bewegbaren Masse 4 in einem günstigen Verhältnis bestimmt werden kann.

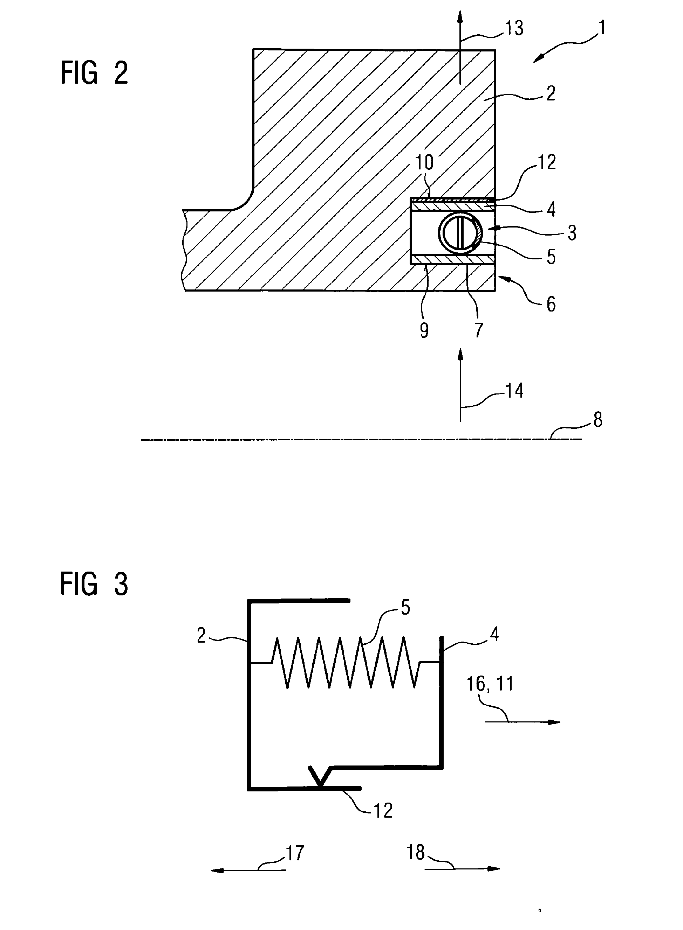

Die Figur 3 zeigt ein Analogon bzw. eine Prinzipskizze zu dem Dämpfungssystem 1. Im Wesentlichen wird die bewegbare Masse 4 in einer Auslenkrichtung 16, die einer tangentialen Richtung der Umfangsrichtung 11 entspricht, ausgelenkt und dieser Auslenkrichtung 16 versucht das Rückhalteelement 5 entgegenzuwirken. Im dynamischen Fall geschieht folgendes: die drehbare Komponente 2 wird in einem ungünstigen Betriebsfall entgegengesetzt zur Auslenkrichtung 16 in eine Beschleunigungsrichtung 17 beschleunigt. Aufgrund der Trägheit der bewegbaren Masse 4 wird diese bewegbare Masse 4 der Bewegung der drehbaren Komponente 2 zunächst nicht folgen. Über die mechanische Kopplung über die Rückhalteelemente 5 wird nach einer entsprechenden Verzögerung die bewegbare Masse 4 ebenfalls in die Beschleunigungsrichtung 17 gezogen. Allerdings entsteht dadurch eine Rückstellkraft 18, die entgegen der Beschleunigungsrichtung wirkt. Der Beschleunigung der drehbaren Komponente 2 in der Beschleunigungsrichtung 7 wird demnach entgegengewirkt. Es könnten somit Schwingungen verhindert werden. Über den Kontakt mit der Gleitschiene 12 und der bewegbaren Masse 4 wird zudem eine Schwingung der bewegbaren Masse 4 gedämpft, da zwischen der Gleitschiene 12 und der bewegbaren Masse 4 Energie dissipiert.

## Patentansprüche

1. Dämpfungssystem (1) umfassend eine drehbare Komponente (2) und eine an diese angeordnete Dämpfungsvorrichtung (3), wobei die Dämpfungsvorrichtung (3) eine bewegbare Masse (4) aufweist und über Rückhalteelemente (5) an die drehbare Komponente (2) angeordnet ist,
wobei die Rückhalteelemente (5) eine Rückstellkraft (18) auf die bewegbare Masse (4) ausüben.

2. Dämpfungssystem (1) nach Anspruch 1,
wobei die bewegbare Masse (4) in Umfangsrichtung (11) angeordnet ist.

3. Dämpfungssystem (1) nach Anspruch 2,
wobei die bewegbare Masse (4) in einer stirnseitigen Nut (7) angeordnet ist.

4. Dämpfungssystem (1) nach Anspruch 1, 2 oder 3,
mit einer Gleitschiene (12),
wobei die bewegbare Masse (4) entlang der Gleitschiene (12) bewegbar ist.

5. Dämpfungssystem (1) nach einem der vorhergehenden Ansprüche,
wobei die Rückhalteelemente (5) als Federn ausgebildet sind.

6. Dämpfungssystem (1) nach einem der vorhergehenden Ansprüche,
wobei die bewegbare Masse (4) in mehrere Segmente in Umfangsrichtung (11) ausgebildet ist.

7. Dämpfungssystem (1) nach Anspruch 6,
wobei ein Segment mittels mehrerer Rückhalteelemente (5) an die Dämpfungsvorrichtung angekoppelt ist.

8. Dämpfungssystem (1) nach Anspruch 4, 5, 6 oder 7, wobei die Gleitschiene (12) im Querschnitt gesehen im Wesentlichen parallel zur Rotationsachse (8) ausgebildet ist.

9. Dämpfungssystem (1) nach Anspruch 6, 7 oder 8,
wobei die bewegbare Masse (4) vier Segmente umfasst.

10. Dämpfungssystem (1) nach Anspruch 5,
wobei pro Segment vier Rückhalteelemente (5) angeordnet sind.

11. Dämpfungssystem (1) nach einem der Ansprüche 4 bis 10, wobei über den Kontakt der bewegbaren Masse (4) und der Gleitschiene (12) Energie dissipierbar ist.
